# EUROPEAN PATENT APPLICATION

(11) **EP 3 603 367 A1**
(43) Date of publication of application: **05.02.2020**
(21) Application number: 19179278.7
(22) Date of filing: 10.06.2019
(51) Int. Cl.: A01B 79/00

(54) **METHOD FOR RENDERING CULTIVATABLE A PLOT OF ROCKY GROUND**

(30) Priority: 03.08.2018 IT 201800007855
(71) Applicant: Fraron S.r.l., 36026 Pojana Maggiore (VI) (IT)
(72) Inventor: Fraron, Lino, 36040 Sossano (VI) (IT)
(74) Representative: Ponchiroli, Simone

(57) **Abstract**

A method for rendering cultivatable a plot of rocky ground comprising a grinding step, wherein a surface layer of the ground is subjected to grinding with a mechanical milling machine until what is obtained is a mixture of dust, stones and, if present, soil, the surface layer which is subjected to grinding covering, starting from the surface of the ground, a depth which is greater than or equal 40 cm; at least one boring step wherein a plurality of holes is made in the ground which extend vertically with a depth of at least 50 cm below the surface layer subjected to grinding, the holes being spaced relative to each other; at least one inserting step wherein at least one explosive charge is inserted in each hole; and at least one detonating step wherein the explosive charges are detonated; wherein the detonating step causes the formation, in any rocky base, of cracks which allow water drainage towards deeper layers of earth.

## Description

This invention relates to a method for rendering cultivatable a plot of rocky ground, where the expression rocky ground means both ground that is practically entirely constituted of rocks, and ground which at least at the surface has earth constituted of a mixture of soil, stones and rocks. It should be noticed that in the context of this description, the difference between stone and rock shall be understood to be purely qualitative, and suitable for differentiating relatively small rocks (considered to be stones) from relatively large rocks and rocky outcrops (instead generically defined as rocks).

Converting stony or rocky ground into fertile ground, usable for agriculture, is a goal that people have aspired to for centuries.

In the distant past it could only be done manually by removing, one by one, the stones and rocks which could hinder cultivation.

Subsequently, with the advent of agricultural machinery, first we saw the development of various equipment able to mechanically remove stones and then of equipment capable of grinding medium-sized stones and rocks. In general, these are milling machines constituted of a motor-driven drum, which rotates inside a containment housing and from the bottom of which it projects, and whose surface is equipped with a plurality of grinding heads.

However, until now, recovering stony and rocky ground for agricultural purposes has only been possible for earth which has a predetermined quantity of soil alternating with stones and rocks. Indeed, in these cases, it was possible to remove or break up the larger stones and rocks, until obtaining earth (constituted of a mixture of soil and medium/small stones) having characteristics compatible with agricultural use.

In contrast, until now it has not been possible to recover, for agricultural use, ground in which soil was present in only a small quantity or even not at all, such as ground constituted of rocky outcrops.

In this context, the technical purpose which forms the basis of this invention has been to provide a method for rendering cultivatable a plot of rocky ground which allows the limits encountered up to now to be overcome.

In particular, the technical purpose of this invention has been to provide a method for rendering cultivatable a plot of rocky ground which comprises rocks of the sedimentary type.

The technical purpose specified and the aims indicated are substantially achieved by a method for rendering cultivatable a plot of rocky ground, as described in the appended claims.

Further features and the advantages of this invention are more apparent in the detailed description which follows, of several preferred, non-limiting embodiments of a method for rendering cultivatable a plot of rocky ground.

The method for rendering cultivatable a plot of rocky ground according to this invention is a structured method providing for the execution of a sequence of steps and which is most profitably used on rocky ground constituted exclusively, or mainly, of sedimentary rocks (which are more friable than igneous rocks) which, not only define the surface of the earth, but also constitute its deeper layers.

That does not mean that the method cannot be advantageously applied even in the presence of other types of rocks or on less critical rocky ground (that is to say, which also includes a predetermined quantity of soil).

Once the plot of ground of interest has been identified, first the method comprises execution of a grinding step, during which a surface layer of the plot of ground of interest is subjected to grinding, with a mechanical milling machine, until what is obtained is a mixture of dust and stones. If the ground also contains soil, obviously the latter will also be present in the final mixture. In particular, in the method the grinding step covers, starting from the surface of the ground, at least a depth which is greater than or equal 40 cm, preferably equal to at least 60 cm.

Depending on requirements, in particular concerning the type of crop which will subsequently be planted in the earth, the grinding step may be performed in such a way as to attempt to obtain a maximum particle size measurement equal to a definite predetermined value (usually several dozen millimetres). In the known way for grinding, control of the particle size measurement may be performed by acting on the time for which the material remains in contact with the milling machine (that is to say, on the advancing speed of the milling machine on the earth and on its speed of rotation).

Depending on requirements, the grinding step may be performed with a single working operation which affects the entire thickness, or with two or more working operations, one after another, at increasing depths.

In an alternative embodiment, the grinding of the surface layer may even be performed in such a way as to obtain different particle size measurements for the upper portion and the lower portion of the surface layer. In particular, a finer particle size measurement may be obtained (usually not greater than several dozen millimetres for the largest pieces) in the upper portion intended for the root growth of crop plants, and a coarser particle size measurement (usually, for the largest pieces, approximately one hundred/one hundred and fifty millimetres) in the lower portion, with the aim of creating a highly draining layer.

According to a preferred embodiment, such a different particle size measurement may be obtained by ensuring that the grinding step in turn comprises a first coarse grinding step, and subsequently a second fine grinding step.

In the coarse grinding step the entire surface layer is subjected to grinding, for example with a first mechanical milling machine, to obtain the coarse particle size measurement in the entire surface layer. In contrast, the fine grinding step only affects an upper portion of the surface layer, a portion which is further subjected to grinding (usually with a second mechanical milling machine) for reducing its average particle size measurement, until the desired fine particle size measurement is obtained. As already indicated, starting from the surface of the ground, the upper portion of the surface layer affects a depth which is less than the entire thickness of the surface layer, preferably a depth less than 90% of the entire thickness of the surface layer, and even more preferably less than 80% of the entire thickness of the surface layer. For example, in the preferred embodiment the surface layer has a thickness of approximately 50 cm, and its upper portion has a thickness of approximately 35 cm.

In the preferred embodiments of the method according to this invention, in which work is done on rocky ground where large rock formations are present which extend not just on the surface, but also deep below the surface layer subjected to grinding, at the end of the grinding step the bottom of the surface layer is delimited by a layer of compact rock, without or almost without any passages capable of allowing any water used for irrigation to flow away. It is known that water stagnation is harmful for many types of crops and therefore must be avoided if possible.

However, it is easy to understand how it is difficult, if not impossible, to assess whether or not the layer immediately below the surface layer subjected to grinding, is a layer of compact rock, without or almost without any passages capable of allowing any water to flow away. Consequently, according to the method disclosed, this condition is always considered to occur at least locally in the plot being worked on, and the further steps described below are implemented.

In order to overcome the possible problem of water stagnation, the method disclosed comprises, once the surface layer has been subjected to grinding in the desired way, first at least one boring step wherein a plurality of holes is made in the ground. Each of those holes is made in such a way that it extends below the surface layer subjected to grinding, by an additional depth of at least 50 cm, preferably by around 80-100 cm.

The holes are also laterally spaced from each other, preferably with predetermined distances from each other (pitch). In particular, the pitch between the holes may or may not be the same along reference lines which are orthogonal to each other. In other words, the holes may be made aligned along parallel lines, and the distance between two holes along the same line (longitudinal pitch) may or may not be equal to the distance between adjacent lines (transversal pitch).

Once the boring step has finished, the method comprises execution of an inserting step, wherein at least one explosive charge is inserted in each hole, and a subsequent detonating step, wherein the explosive charges are detonated (simultaneously or one after another).

The aim of the detonating step is to cause the splitting of the rocky base and the consequent formation of deep cracks which allow water drainage towards deeper layers of earth.

Having considered that, the detonating depth, and the power of the explosive charges, will have to be selected in such a way as to achieve the desired effect while at the same time avoiding effects devastating the earth above. Reasonably, in most cases it will therefore be preferable to position a larger number of explosive charges with limited power (for example quarry micro-charges) in holes which are relatively near each other, rather than a smaller number of higher powered charges, in holes which are further apart. Depending on the applications, the type of earth, and the equipment available, it is also possible to perform the boring, inserting and detonating steps only once for each area of the plot to be treated, or to repeat the sequence of those steps a plurality of times.

In the latter case, each time the sequence of steps is repeated, it will be possible to perform the boring step by making deeper holes in the earth, or by making holes in different positions in the earth.

In order to minimise dispersion of the explosive power of the explosive charges, after the inserting step, and before the detonating step, there may also be a covering step, wherein the holes containing the explosive charges are covered and/or filled with earth (in particular with the material of the surface layer subjected to grinding).

This invention brings important advantages.

In fact, thanks to this invention it has been possible to provide a method for rendering cultivatable a plot of rocky ground which, even in the presence of compact rocky ground, allows earth to be obtained which has a good particle size measurement and which guarantees sufficient water drainage towards the deeper layers.

In particular, thanks to this invention it has been possible to provide a method for rendering cultivatable a plot of rocky ground which, starting with compact rocky ground, allows the obtainment of cultivatable earth particularly suitable for plants such as olive trees, grapevines and helichrysum.

Finally, it should be noticed that this invention is relatively easy to produce and that even the cost linked to implementing the invention is not very high.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A method for rendering cultivatable a plot of rocky ground comprising the following operating steps:
a grinding step wherein a surface layer of the ground is subjected to grinding with a mechanical milling machine to obtain a mixture of dust, stones and, if present, soil, the surface layer which is subjected to grinding covering, starting from the surface of the ground, a depth which is greater than or equal 40 cm;
at least one boring step wherein a plurality of holes is made in the ground which extend vertically with a depth of at least 50 cm below the surface layer subjected to grinding, the holes being spaced relative to each other;
at least one inserting step wherein at least one explosive charge is inserted in each hole;
and at least one detonating step wherein the explosive charges are detonated.

2. The method according to claim 1 wherein, after the grinding step, the bottom of the surface layer subjected to grinding is delimited by a rocky base which comprises one or more layers of compact rock, and wherein the detonating step causes splitting of the rocky base.

3. The method according to claim 3 wherein splitting of the rocky base causes the formation in the rocky base of cracks which allow water drainage towards deeper layers of earth.

4. The method according to any of claims 1 to 3 wherein the sequence of steps which comprises the steps of boring, inserting and detonating is repeated a plurality of times.

5. The method according to claim 4 wherein, with each repetition, the boring step is performed by making deeper holes in the earth.

6. The method according to claim 4 wherein, with each repetition, the boring step is performed by making holes in different positions in the earth.

7. The method according to any of claims 1 to 6 wherein during the boring step the holes in the earth are made at predetermined distances from each other.

8. The method according to any of claims 1 to 7 wherein after the inserting step and before the detonating step there is also a covering step wherein the holes containing the explosive charges are covered and/or filled with earth.

9. The method according to any of claims 1 to 8 wherein the grinding step comprises a first coarse grinding step, during which the entire surface layer is subjected to grinding, and, subsequently, a second fine grinding step, wherein an upper portion of the surface layer is further subjected to grinding, for reducing its average particle size measurement; the upper portion of the surface layer affecting, starting from the surface of the ground, a depth which is less than the entire thickness of the surface layer.

10. The method according to claim 9 wherein the second fine grinding step affects an upper portion of the surface layer whose thickness is less than 90% of the entire thickness of the surface layer, preferably less than 80% of the entire thickness of the surface layer.
